# EUROPÄISCHE PATENTANMELDUNG

(11) **EP 3 695 749 A1**
(43) Veröffentlichungstag der Anmeldung: **19.08.2020**
(21) Anmeldenummer: 19186154.1
(22) Anmeldetag: 12.07.2019
(51) Int. Cl.: A47B 83/00, A47B 97/00, E04H 3/02

(54) **MODULARES MÖBELSYSTEM**

(30) Priorität: 15.02.2019 CH 1982019
(71) Anmelder: Halter AG, 8005 Zürich (CH)
(72) Erfinder: Valsecchi, Alex Mario, 8006 Zürich (CH)
(74) Vertreter: Naiu, Radu Mircea

(57) **Zusammenfassung**

Ein modulares Möbelsystem (1) hat mindestens zwei in einem Raum elektrisch und unabhängig voneinander verfahrbaren Möbelmodulen (2), wobei jedes Möbelmodul (2) einen eigenen, von einem Steuerungsrechner (10) des Möbelsystems (1) gesteuerten Motor (8) umfasst. Für das modulare Möbelsystem (1) ist ein elektrischer Linearantrieb mit einem entlang einer Wand (15a) des Raums befestigten ersten Antriebselement (3a) und einem an jedem Möbelmodul (2) befestigten zweiten Antriebselement (3b) vorgesehen. Das erste Antriebselement (3a) wirkt mit dem zweiten Antriebselement (3b) zusammen, so dass jedes Möbelmodul (2) individuell mittels des Linearantriebs in Zusammenwirkung mit dem eigenen Motor (8) verfahrbar ist. Das Möbelsystem (1) umfasst weiter ein Schienensystem (4a) zur Stützung der Möbelmodule (2), wobei das Schienensystem (4a) an einer Wand des Raums angeordnet ist und wobei beim Verfahren eines Möbelmoduls (2) ein Stützelement (4b) des Möbelmoduls (2) auf dem Schienensystem (4a) aufliegt.

## Beschreibung

### Hinweis auf verwandte Dokumente

Dieses Dokument beansprucht die Priorität der Schweizerischen Patentanmeldung Nr. 0198/19, eingereicht am 15. Februar 2019, deren gesamten Inhalt hiermit durch Bezug aufgenommen wird.

### Gebiet der Erfindung

Die Erfindung betrifft ein modulares Möbelsystem gemäss Anspruch 1.

### Hintergrund

Möbelsysteme mit verschiebbaren Möbelmodulen sind bekannt. Beispielsweise wurden modulare Rollregale als sogenannte Kompaktusanlagen zur Aufbewahrung von Akten entwickelt. Dabei sind mehrere Module hintereinander angeordnet. Um an die Akten eines Moduls zu gelangen, werden die Module manuell verschoben bis ein Zugangsraum zwischen dem interessierenden Modul und dem benachbarten Modul entsteht. Dieses Konzept wurde ferner auf Wohneinheiten übertragen, bei den Möbelmodule vorkonfiguriert sind und durch Verschieben der einzelnen Module verschiedene Zwischenräume geschaffen werden können, die dem einen oder dem anderen Zweck dienen, z.B. ein Wohnraum oder ein Schlafraum. Aufgrund des Komforts wurden Lösungen entwickelt, bei denen die Möbelmodule elektrisch verfahrbar sind.

Solche modularen Möbelsysteme sind mit dem Augenmerk entwickelt worden, Platz zu sparen, bzw. einen Raum optimal zu nutzen. Eine Herausforderung dabei ist die Anpassung des Möbelsystems an die verschiedenen Raumkonfigurationen bzw. Raumaufbau.

### Darstellung der Erfindung

Aufgabe der Erfindung ist die Bereitstellung eines verbesserten modularen Möbelsystems.

Die Aufgabe wird mit einem modularen Möbelsystem mit mindestens zwei in einem Raum elektrisch und unabhängig voneinander verfahrbaren Möbelmodulen. Jedes Möbelmodul umfasst einen eigenen, von einem Steuerungsrechner des Möbelsystems gesteuerten Motor. Für das modulare Möbelsystem ist ein elektrischer Linearantrieb mit einem an einer Wand des Raums befestigten ersten Antriebselement und einem an jedem Möbelmodul befestigten zweiten Antriebselement vorgesehen. Das erste Antriebselement wirkt mit dem zweiten Antriebselement zusammen, so dass jedes Möbelmodul individuell mittels des Linearantriebs in Zusammenwirkung mit dem eigenen Motor verfahrbar ist. Das modulare Möbelsystem umfasst weiter ein Schienensystem zur Stützung der Möbelmodule, das an einer Wand des Raums angeordnet ist. Beim Verfahren eines Möbelmoduls liegt ein Stützelement des Möbelmoduls auf dem Schienensystem auf.

Das vorliegende System hat den Vorteil dass die Führung der Möbelmodule wandseitig erfolgt. Es müssen also keine Führungsnuten im Boden eingelassen sein, um die Möbelmodule geführt zu verfahren, was den Aufbauaufwand reduziert.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische perspektivische Darstellung des erfindungsgemässen Möbelsystems, und
Fig. 2 eine schematische Schaltdarstellung des erfindungsgemässen Möbelsystems aus Fig. 1.

### Wege zur Ausführung der Erfindung

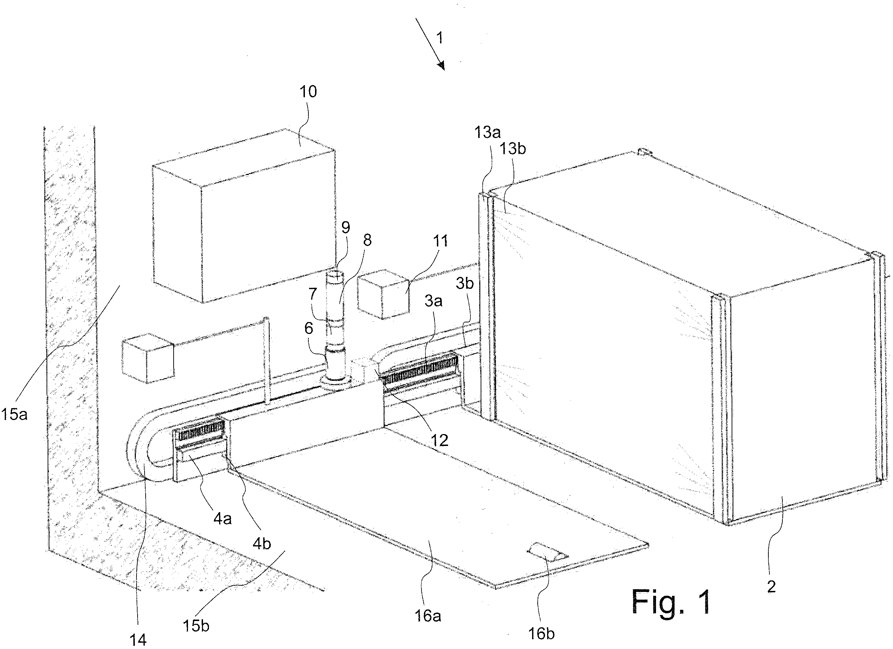

**Fig. 1** stellt perspektivisch ein erfindungsgemässes Möbelsystem 1 dar. Das modulare Möbelsystem 1 hat mehrere in einem Raum elektrisch und unabhängig voneinander verfahrbare Möbelmodule 2, von den in der Figur aus Übersichtlichkeitsgründen nur ein Modul 2 gezeigt ist. Ein weiteres Modul 2 würde auf der Abstützunterlage oder Unterbau 16a angeordnet sein, es ist jedoch nicht gezeigt, um die hinten angeordneten Elemente des Moduls sichtbar zu machen. Im vorliegenden Kontext bedeutet der Begriff "hinten" zur Wand 15a hin.

Wie erwähnt umfasst jedes Möbelmodul 2 einen eigenen, von einem Steuerungsrechner 10 des Möbelsystems 1 gesteuerten Motor 8. Für das modulare Möbelsystem 1 ist ein elektrischer Linearantrieb mit einem entlang der Wand 15a des Raums befestigten ersten Antriebselement 3a und einem an jedem Möbelmodul 2 befestigten zweiten Antriebselement 3b vorgesehen. Es wird angemerkt dass im vorliegenden Dokument der Linearantrieb als Antriebsstrang und der Motor als die antreibende Kraft verstanden werden. Das erste Antriebselement 3a wirkt mit dem zweiten Antriebselement 3b zusammen, so dass jedes Möbelmodul 2 individuell mittels des Linearantriebs in Zusammenwirkung mit dem eigenen Motor 8 verfahrbar ist. Der Steuerungsrechner weist für die Steuerung einer Geschwindigkeit jedes Möbelmoduls 2 einen Motorcontroller 12 und einen mit dem Motor 8 gekoppelten ersten Encoder 9 zur Regelung einer Drehzahl des Motors 8 auf. Der Motorcontroller 12 ist mit dem ersten Encoder 9, welcher vorzugsweise ein Encoder mit zwei Hall-Sensoren ist, elektrisch verbunden. Der Motorcontroller 12 erfüllt die Zertifizierung für Norm IEC 60335-1 in der am Anmeldetag dieser Anmeldung gültigen Fassung. Der Motorcontroller 12 hat ferner Schnittstellen für Encoder mit zwei Hall-Sensoren.

Das erste Antriebselement 3a ist in einer bevorzugten Ausführungsform eine Zahnstange 3a und das zweite Antriebselement 3b ein Ritzel 3b, der mit der Zahnstange 3a in Eingriff steht. Dabei wird bevorzugt eine Evolventenverzahnung verwendet, da diese leise, robust und einfach herzustellen ist. Zum Verfahren des Möbelmoduls 2 ist der Ritzel 3b mit dem Motor gekoppelt.

In einer weiteren, nicht gezeigten Ausführungsform kann der Linearantrieb ein Spindelantrieb mit einer entlang der Wand montierten Spindel sein.

In einer weiteren, nicht gezeigten Alternative kann der Linearantrieb als Direktantrieb ausgestaltet sein.

Zwischen Linearantrieb und Motor 8 ist ein Getriebe 7 vorgesehen. Bevorzugt wird hier ein Planetengetriebe verwendet, da dieser den Vorteil hat, dass er leise ist, was für die Anwendung in einem bewohnten Raum, in dem Getriebegeräusche als störend empfunden werden, besonders wichtig ist. Ein Direktantrieb kann aber auch zur Anwendung kommen, so dass kein Getriebe notwendig ist. Weiter ist zwischen Linearantrieb und Motor 8 eine mechanische Kraftbegrenzung, insbesondere eine Drehmomentbegrenzung, insbesondere eine Rutschkupplung, zwischengeschaltet. Die mechanische Kraftbegrenzung ist derart ausgestaltet, dass sie die Verbindung zwischen Motor 8 und Linearantrieb trennt, sobald ein vordefiniertes Drehmoment anliegt. Diese Sicherheitskupplung trägt dem Umstand Rechnung, dass sich beispielsweise ein Benutzer zwischen zwei benachbarten Modulen 2 befindet, während diese aufeinander zu bewegt werden. Sobald ein Modul auf ein Hindernis trifft, kommt die Rutschkupplung zum Einsatz, die den Motor 8 vom Linearantrieb trennt. Dabei kann die Kraftgrenze, bei der die Kupplung auslösen soll, mechanisch eingestellt. Jedenfalls wird hier ein Wert eingestellt, bei dem keine ernsthaften Verletzungen der Bedienperson auftreten können und der den geltenden Sicherheitsbestimmungen entspricht. Der Steuerungsrechner 10 ist zur Erkennung einer Trennung der Verbindung zwischen Linearantrieb und Motor 8 mittels der mechanischen Kraftbegrenzung 6 derart ausgestaltet, dass er kontinuierlich oder in vordefinierten Zeitintervallen die Drehzahl des Motors 8 mit dem Positionssignal des zweiten Encoders vergleicht und überprüft ob eine Abweichung über einem vordefinierten Schwellwert liegt. Hat sich die Position nicht oder nur geringfügig geändert und dreht der Motor (im Leerlauf) weiter, so kann dies vom Steuerungsrechner 10 als Entkopplung des Motors 8 vom Linearantrieb gedeutet werden. Als Reaktion kann der Steuerungsrechner den Motor 8 abschalten und die von der Positionserkennung gelieferte Stillstandposition speichern.

Die Positionserkennung wird mit einem System zur absoluten Wegmessung durchgeführt. Dafür ist im modularen Möbelsystem 1 für jedes Modul ein Seilzugsensorsystem vorgesehen, welches einen an einem fixen Referenzpunkt befestigtes Seil umfasst. Ferner umfasst es an jedem Möbelmodul 2 einen mit dem Seil zusammenwirkenden Seilzugsensor mit einem zweiten Encoder zur Ausgabe eines Positionssignals, das sich aus dem Ab- bzw. Aufrollen des Seils während der Bewegung des Moduls 2 ergibt.

Die Beschleunigung ist innerhalb gewisser Grenzen einstellbar; die Schranken der Wahl der Beschleunigung sind durch das Auslösedrehmoment der Rutschkupplung gegeben, d.h. das Beschleunigungsdrehmoment muss unter dem Auslösedrehmoment der Rutschkupplung liegen. Im Falle der Auslösung der Rutschkupplung aufgrund eines Hindernisses wird beim nächsten Anfahren des Moduls eine tiefe lineare Beschleunigung durchgeführt, bis eine Verschiebung des Moduls 2 mittels des Positionssensors detektiert wird (Einrasten der Rutschkupplung).

Beim Bremsen eines Moduls 2 wird zwischen einem normalen Bremsvorgang und einem Notbremsvorgang unterschieden. Der Steuerungsrechner 10 macht diese Unterscheidung basierend auf bestimmte Signale die er empfängt. Wurde ein Notstopp vom Benutzer initiiert, so wird das Modul 2 um ein Vielfaches schneller gebremst, als bei einem normalen Stoppvorgang beim Verstellen des Moduls 2. Im Falle dieses Sicherheitsbremsprofils wird nach der Detektion der Notstoppbedingung ausgelöst, wobei das Modul innerhalb einer kurzen Strecke zum Halten kommen muss. Daher wird in diesem Fall vorzugsweise aktiv gebremst. Beim normalen Bremsvorgang wird die Bremsung unmittelbar nach Detektion einer entsprechenden Bedingung angestossen, wobei linear auf 0 cm/s gebremst wird. Selbstverständlich sind die Beschleunigungs- und Bremswerte einstellbar und können je nach zu hinterlegenden Strecken für das Modul 2 und je nach Modulgewicht angepasst werden.

Weiter ist ein Schienensystem 4a zur Stützung der Möbelmodule 2 vorgesehen, das an einer Wand des Raums angeordnet ist. Beim Verfahren eines Möbelmoduls 2 liegt ein Stützelement 4b des Möbelmoduls 2 auf dem Schienensystem 4a auf.

Zwischen den Modulen ist immer ein Sicherheitsabstand vorgesehen. Einerseits ist dadurch sichergestellt dass z.B. Finger nicht eingeklemmt werden können, die wegen der geringen Gegenkraft von der Rutschkupplung eventuell nicht als Hindernis detektierbar wären. Andererseits wird dadurch vermieden dass zwei benachbarte Module aneinanderstossen und sich möglicherweise gegenseitig beschädigen.

Die Schiene 4a des Schienensystems ist vorzugsweise als Linear-Wälzlager ausgestaltet und im Wesentlichen parallel zum Raumboden 15b angeordnet. Insbesondere handelt es sich dabei um eine Kugelumlauf-Linearführung. Diese Ausführungsform ist vorteilhaft, da sie ein leichteres Gleiten des Stützelements 4a erlaubt und vergleichsweise leise ist. Da das Möbelmodul 2, das mittels des Stützelements 4b auf der Schiene getragen wird, schwer ist, ist das Möbelmodul 2 zusätzlich auf der Abstützunterlage 16a, die mit dem Stützelement 4b fest verbunden oder einstückig ist, abgestützt. Die Abstützunterlage 16a ruht ihrerseits mittels mindestens einer Rolle 16b auf dem Boden 15b. Vorzugsweise ist diese Rolle 16b am Möbelmodul 2 gegenüber dem Schienensystem 4a angeordnet. Es könnten aber auch mehrere Rollen vorgesehen sein, beispielsweise an den dem Schienensystem gegenüberliegenden Ecken der Abstützunterlage 16a. Durch den Einsatz von Rollen 16b wird das Gewicht des Moduls 2 besser auf entgegengesetzte Bereiche des aus Abstützunterlage 16a und Stützelement 4b gebildeten Abstützsystems verteilt und somit eine höhere Stabilität erreicht. An dieser Stelle wird auch der oben genannte zentraler Vorteil des Möbelsystems 1 klar: da der Antrieb des Möbelsystems wandseitig angeordnet ist und nur an einigen Punkten im Boden verankert ist, vereinfacht sich der Aufbau des Möbelsystems 1: es müssen wie bereits erwähnt keine durchgehenden, langen Führungsnuten im Boden eingelassen sein, um die Möbelmodule geführt zu verfahren. Das ist vorteilhaft, da Boden aus einer Vielzahl von Materialien mit unterschiedlichen physikalischen Eigenschaften bestehen können, die unterschiedlich berücksichtigt werden müssten. Auch eine allfällige Bodenheizung muss im vorliegenden Fall nicht berücksichtigt werden. Ferner stellen Bodenwellen beim vorliegenden Möbelsystem 1 ein kleineres Problem dar, da lediglich die genannten Rollen 16b auf dem Boden 15b rollen. Die Rolle 16b aus einem geeigneten Gummi hergestellt werden, der einerseits eine Federwirkung hat und andererseits den Boden im Gegensatz zu härteren Materialien schont.

Bevorzugt umfasst jedes Möbelmodul 2 einen optoelektronischen Sensor 13a, insbesondere ein Lichtgitter 13b, zur Detektion eines Hindernisses beim Verfahren des Möbelmoduls 2. Der optoelektronische Sensor 13a umfasst mindestens eine Lichtquelle und mindestens einen Empfänger und ist zur Abdeckung der gesamten Breite des Möbelmoduls 2 ausgelegt, was in Fig. 1 durch die divergierenden Linien 13b illustriert ist. Dabei ragen die Lichtquelle und der Empfänger von einer Front- oder Rückseite des Möbelmoduls 2 weg und sind jeweils mittels einer (nicht gezeigten) Feder gehalten, so dass sie beim Kollidieren mit einem Objekt bzw. beim Zusammenführen mit einem benachbarten Modul entgegen der Federkraft in eine dafür vorgesehene Nische eindrückbar sind und nicht mehr aus dem Möbelmodul 2 hinausragen, was ebenfalls eine Detektion auslöst. Die Nische für den optoelektronischen Sensor 13a ist in Fig. 1 durch die Aussparung hinter dem mit 13a gekennzeichneten Balken gezeigt. Ergänzend zum optoelektronischen Sensor ist für jedes Möbelmodul 2 mindestens ein Drucksensor 13c vorgesehen. Der Drucksensor 13c kann z.B. ein Drucktaster oder Druckschalter sein und ist im Bereich der einen, vorzugsweise der beiden in hin und zurück Fahrtrichtung gesehen vorderen Kante bzw. Kanten der Abstützunterlage 16a angeordnet. In Ausführungsformen des Möbelmoduls sind mehrere Drucksensoren entlang der Kante oder Kanten verteilt. Mittels des Drucksensors oder der Drucksensoren ist beim Kollidieren des Möbelmoduls 2 mit einem bodennahen Objekt, das eventuell vom Lichtgitter des optoelektronischen Sensors nicht erfasst werden kann, eine Detektion auslösbar. Im Kontext des vorliegenden Textes bedeutet eine solche Detektion dass anschliessend ein Notstopp des fahrenden Möbelmoduls eingeleitet wird.

Es ist bevorzugt dass insbesondere bei einem Notstopp kein nachfolgendes Anfahren irgendeines Möbelmoduls vom Steuerungsrechner erlaubt wird, bis die Notstoppbedingung vom Benutzer aufgehoben wurde.

Die Antriebskomponenten und der optoelektronische Sensor sind in einer Wandanbindung untergebracht, die als Blende für einen aufgeräumten optischen Eindruck sorgt, den Benutzer vor den bewegten Teilen des Möbelsystems 1 schützt und die Komponenten des Möbelsystems 1 vor Staub, usw. schützt.

Wie bereits erwähnt ist das Möbelsystem 1 elektrisch angetrieben. Im Falle einer Unterbrechung der Stromversorgung bzw. in einem Fehlerfall lässt sich jedes Möbelmodul 2 auch einzeln manuell steuern. Dazu lässt sich an jedem Möbelmodul 2 eine mechanische Kurbel koppeln, mittels welcher das Möbelmodul 2 manuell durch Drehen der Kurbel verfahrbar ist (nicht gezeigt).

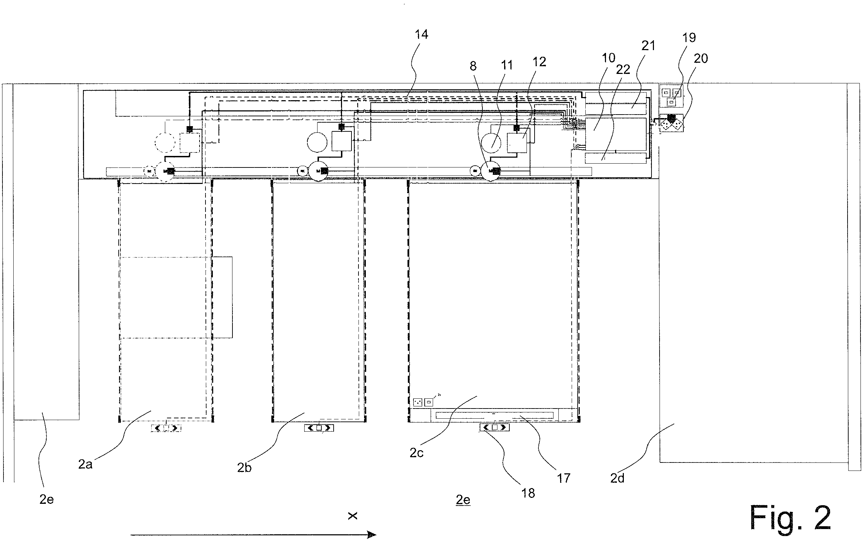

**Fig. 2** zeigt eine schematische Schaltdarstellung des erfindungsgemässen Möbelsystems 1 aus Fig. 1 in einer typischen Konfiguration, integriert in einer Wohnung. Das Möbelsystem 1 umfasst mehrere Möbelmodule 2; ein Büro 2a, einen Schrank 2b und ein Bett 2c, die in x-Richtung hin und her bewegbar sind. Ferner sind in der Wohnung nicht verschiebbar eine Küche 2e und ein Bad 2d vorgesehen. Weiter kann im Bereich vor den Modulen ein Wohnzimmer vorgesehen sein. Es wird bemerkt, dass auch nur zwei Möbelmodule vorgesehen sein können, beispielsweise ein Bettmodul und ein Schrankmodul. Wie in der Figur ersichtlich kann für eine maximale Platzausnutzung das Büro 2a an die Küche 2e gefahren werden, um mehr Büroplatz zu bekommen. Umgekehrt kann das Büro 2a nach rechts gefahren werden, so dass die Küche zugänglich wird. Mit anderen Worten schafft das vorliegenden Möbelsystem nicht nur Platz zwischen den eigenen Modulen, sondern es kann so positioniert werden, dass zusätzliche, mit festen Wohnungsbestandteilen zusammenhängende Räume auch modular verwendet werden können. Es kann aber auch vorgesehen sein, dass z.B. eine Spüle und der Kühlschrank in jedem Betriebsmodus zugänglich sind.

Der modulare Aufbau funktioniert nun so, dass die Module 2a-2c nach links oder rechts mittels einer Bedienungsschnittstelle 18 verfahren werden können. Wird beispielsweise das Bett 2c nach rechts verschoben und der Schrank nach links, entsteht ein Schlafzimmer mit Schrankzugang. Wird der Schrank nun nach rechts verschoben und das Büromodul nach links, so entsteht ein Büro und das Schrankmodul 2b liegt am Bettmodul an und ist nicht mehr zugänglich. Die Module selbst können in einer Vielzahl von Konfigurationen geliefert werden, z.B. als die genannten Standardmodule oder sie können den Wünschen des Kunden angepasst werden. Beispielsweise können in einem Modul verschiedene einklappbare oder kippbare Möbelelemente vorgesehen sein, wie z.B. ein umklappbarer oder ausziehbarer Tisch im Büromodul 2a. Über die obengenannte Wandanbindung wird jedes Modul 2 über eine Netzanbindung 22 und einen Stromverteiler 21 mit Strom versorgt. Beispielsweise können dadurch Lampen, z.B. ein Lese- oder Arbeitslicht, oder andere elektrischen Geräte, wie z.B. ein TV-Gerät 17 untergebracht werden. Weiter können die Module so beschaffen sein, dass sie von beiden Seiten zugänglich sind, um die jeweilige Funktion in mehreren Konfigurationen nutzen zu können.

In der Figur sind auch der Steuerungsrechner 10, der Linearantrieb, der Positionssensor 11 und der Motor 8 mit dem Motorcontroller 12 gezeigt. Ferner sind die elektrischen Verbindungen mit dem Steuerungsrechner und der Stromversorgung gezeigt. Dabei handelt es sich um Verbindungen für Signale zur Positionierung der Möbelmodule und um sicherheitsrelevante Signale, die z.B. mit allfälligen Hindernissen beim Verfahren der Module 2 einhergehen. Dabei sind alle mit beweglichen Teilen verbundenen Signal- bzw. Stromkabel mittels einer Schleppkette geführt, so dass eine zuverlässige Verbindung gewährleistet wird und die Kabel kontrolliert geführt sind. Die Schleppkette 14 ist aus ästhetischen und Schutzgründen auch in der Wandanbindung angeordnet.

Das System umfasst weiter Steckdosen 20 und eine Netzwerkanbindung für den Benutzer. Die Netzwerkanbindung ist einerseits dazu vorgesehen, dem Benutzer Internetzugriff zu ermöglichen und andererseits um das Möbelsystem 1 selbst an das Internet anzuschliessen. Damit ist z.B. eine Ferndiagnose im Fehlerfall bequem zur Fehlerermittlung abrufbar. Ferner kann dadurch das Möbelsystem vom Benutzer selbst ferngesteuert werden. Beispielsweise kann der Benutzer mit seinem Smartphone bevor er nach Hause kommt eine bestimmte Möbelkonfiguration einstellen und diese an das Möbelsystem 1 schicken, welches daraufhin die Module entsprechend selbstständig verfährt. Dazu umfasst der Steuerungsrechner 10 weiter ein Modul zur Verarbeitung von Benutzerdaten, die er von einer Benutzerschnittstelle empfängt, unabhängig davon ob diese Daten von einem Ferngerät oder durch direkte Bedienung der Benutzerschnittstelle stammen. Der Steuerungsrechner umfasst ausser Software für die Steuerung der Möbelmodule 2 auch Software zur Änderung von Parametern und Einstellung verschiedener Grössen bzw. voreingestellter Benutzungsprofile. Dabei können die einzelnen Module nicht nur eigenständig mittels eines einzigen Knopfdrucks verfahren werden, sondern es ist auch möglich, Zwischenpositionen eines Moduls 2 anzusteuern, indem die entsprechende "Links-" oder "Rechtstaste" bis zur gewünschten Position gedrückt gehalten wird.

Das Möbelsystem 1 kann vorzugsweise auch in Hausautomationssystemen integriert werden, wobei zu diesem Zweck entsprechenden Schnittstellen am Steuerungsrechner 10 vorgesehen sind.

Die beweglichen Teile des Möbelsystems 1 sind soweit möglich von der Umgebung abgeschirmt, einerseits aus Sicherheitsgründen und andererseits aus Verschmutzungsgründen. Überall wo es sinnvoll ist werden zu diesem Zweck beispielsweise Bürstendichtungen verwendet, die einerseits den Schmutz von aussen abweisen und andererseits für die Abdichtung bewegter Teile geeignet ist. Insbesondere kann eine solche Dichtung an der Wandanbindung entlang der verstellbaren Länge für die beim Verfahren der Module mitgeführten Kabel, oder bei der Rolle 16b vorgesehen sein.

Das Möbelsystem kann wie erwähnt in bestehende Wohnungen integriert werden. Dabei wird so vorgegangen, dass zunächst das Schienensystem samt Antrieb und Unterbau 16a befestigt werden. Anschliessend werden die Möbelmodule 2 aufgebaut, wobei je nach Zugangsmöglichkeiten für die Wohnung die Module vorher fertig gebaut werden können oder in Teilen in die Wohnung transportiert und erst dann zusammengebaut werden. Danach wird das System an die notwendigen Anschlüsse wie Strom, Fernsehen und evtl. Netzwerk, wenn kein WLAN vorhanden ist, angeschlossen. Schliesslich wird das Möbelsystem programmiert und getestet.

Obwohl bevorzugte Ausführungsformen der Erfindung beschrieben worden sind wird darauf hingewiesen, dass die Erfindung auf anderen Weisen im Rahmen der nachfolgenden Ansprüchen realisiert werden kann. Dabei beziehen sich in der Beschreibung verwendete Begriffe wie "bevorzugt", "insbesondere", "vorteilhaft", etc. nur auf optionale und beispielhafte Ausführungsformen.

## Patentansprüche

1. Modulares Möbelsystem (1) mit mindestens zwei in einem Raum elektrisch und unabhängig voneinander verfahrbaren Möbelmodulen (2), wobei jedes Möbelmodul (2) einen eigenen, von einem Steuerungsrechner (10) des Möbelsystems (1) gesteuerten Motor (8) umfasst, und wobei für das modulare Möbelsystem (1) ein elektrischer Linearantrieb mit einem entlang einer Wand (15a) des Raums befestigten ersten Antriebselement (3a) und einem an jedem Möbelmodul (2) befestigten zweiten Antriebselement (3b) vorgesehen ist, wobei das erste Antriebselement (3a) mit dem zweiten Antriebselement (3b) zusammenwirkt, so dass jedes Möbelmodul (2) individuell mittels des Linearantriebs in Zusammenwirkung mit dem eigenen Motor (8) verfahrbar ist,
weiter umfassend ein Schienensystem (4a) zur Stützung der Möbelmodule (2), wobei das Schienensystem (4a) an einer Wand des Raums angeordnet ist und wobei beim Verfahren eines Möbelmoduls (2) ein Stützelement (4b) des Möbelmoduls (2) auf dem Schienensystem (4a) aufliegt.

2. Modulares Möbelsystem nach Anspruch 1,
wobei das erste Antriebselement eine Zahnstange (3a) ist und das zweite Antriebselement (3b) ein Ritzel (3b) ist, der mit der Zahnstange (3a) in Eingriff steht, wobei zum Verfahren des Möbelmoduls (2) der Ritzel (3b) mit dem Motor gekoppelt ist, oder
wobei der Linearantrieb ein Spindelantrieb mit einer entlang der Wand (15a) montierten Spindel ist, oder
wobei der Linearantrieb als Direktantrieb ausgestaltet ist.

3. Modulares Möbelsystem nach Anspruch 1 oder 2, wobei zwischen Linearantrieb und Motor ein Getriebe (5), insbesondere ein Planetengetriebe, vorgesehen ist.

4. Modulares Möbelsystem nach einem der vorangehenden Ansprüche, wobei die Schiene (4a) des Schienensystems als Linear-Wälzlager ausgestaltet und im Wesentlichen parallel zum Raumboden (7b) ist.

5. Modulares Möbelsystem nach einem der vorangehenden Ansprüche, wobei das Möbelmodul (2) mittels mindestens einer Rolle (8b), insbesondere welche am Möbelmodul (2) gegenüber dem Schienensystem (4a) angeordnet ist, auf dem Boden (7b) des Raums abgestützt ist.

6. Modulares Möbelsystem nach einem der vorangehenden Ansprüche, wobei zwischen Motor und Linearantrieb eine mechanische Kraftbegrenzung, insbesondere eine Drehmomentbegrenzung, insbesondere eine Rutschkupplung, zwischengeschaltet ist, welche derart ausgestaltet ist, dass sie die Verbindung zwischen Motor und Linearantrieb trennt, sobald ein vordefiniertes Drehmoment anliegt, wobei die Trennung der Verbindung vom Steuerungsrechner detektierbar und der Motor vom Steuerungsrechner daraufhin ausschaltbar ist.

7. Modulares Möbelsystem nach einem der vorangehenden Ansprüche, wobei der Steuerungsrechner für die Steuerung einer Geschwindigkeit jedes Möbelmoduls einen Motorcontroller und einen mit dem Motor gekoppelten ersten Encoder zur Regelung einer Drehzahl des Motors aufweist, insbesondere wobei der Motorcontroller (12) mit dem ersten Encoder elektrisch verbunden ist,
wobei der Steuerungsrechner weiter ein Modul zur Verarbeitung von Benutzerdaten aufweist, die er von einer Benutzerschnittstelle empfängt.

8. Modulares Möbelsystem nach einem der vorangehenden Ansprüche, weiter umfassend ein System zur absoluten Wegmessung zur Positionserkennung, wobei ein Seilzugsensorsystem einen an einem fixen Referenzpunkt befestigtes Seil und an jedem Möbelmodul einen mit dem Seil zusammenwirkenden Seilzugsensor mit einem zweiten Encoder zur Ausgabe eines Positionssignals umfasst.

9. Modulares Möbelsystem nach den Ansprüchen 6 bis 8, wobei der Steuerungsrechner zur Erkennung einer Trennung der Verbindung zwischen Linearantrieb und Motor mittels der mechanischen Kraftbegrenzung derart ausgestaltet ist, dass er kontinuierlich oder in vordefinierten Zeitintervallen die Drehzahl des Motors mit dem Positionssignal des zweiten Encoders vergleicht und überprüft ob eine Abweichung über einem vordefinierten Schwellwert liegt.

10. Modulares Möbelsystem nach einem der vorangehenden Ansprüche, wobei jedes Möbelmodul einen optoelektronischen Sensor, insbesondere ein Lichtgitter, zur Detektion eines Hindernisses beim Verfahren des Möbelmoduls umfasst, wobei der optoelektronische Sensor eine Lichtquelle und einen Empfänger umfasst und zur Abdeckung der gesamten Breite des Möbelmoduls ausgelegt ist, wobei die Lichtquelle und der Empfänger von einer Front- oder Rückseite des Möbelmoduls weg ragen und jeweils mittels einer Feder gehalten sind, so dass sie beim Kollidieren mit einem Objekt entgegen der Federkraft in eine dafür vorgesehene Nische eindrückbar sind und nicht mehr aus dem Möbelmodul hinausragen, wodurch eine Detektion auslösbar ist.

11. Modulares Möbelsystem nach einem der vorangehenden Ansprüche, wobei sich an jedes Möbelmodul eine mechanische Kurbel koppeln lässt, mittels welcher das Möbelmodul manuell durch Drehen der Kurbel verfahrbar ist.

12. Modulares Möbelsystem nach einem der vorangehenden Ansprüche, wobei an jedem Möbelmodul mindestens ein Abstandshalter vorgesehen ist, um beim aneinander anliegenden Modulen einen Sicherheitsabstand zu gewährleisten.

13. Modulares Möbelsystem nach einem der vorangehenden Ansprüche,
wobei zwei Möbelmodule vorgesehen sind, wobei ein erstes Möbelmodul ein Bettmodul und ein zweites Möbelmodul ein Schrankmodul ist oder
wobei drei Möbelmodule vorgesehen sind, wobei ein erstes Möbelmodul ein Büromodul ist, ein zweites Möbelmodul ein Bettmodul mit einem insbesondere umklappbaren Bett ist und ein drittes Möbelmodul ein Schrankmodul ist.

14. Modulares Möbelsystem nach einem der vorangehenden Ansprüche, wobei jedes Möbelmodul mindestens einen Drucksensor (13c), insbesondere einen Drucktaster oder Druckschalter, umfasst, wobei der Drucksensor (13c) im Bereich der einen, insbesondere der beiden in hin und zurück Fahrtrichtung gesehen vorderen Kanten der Abstützunterlage (16a) angeordnet ist, insbesondere wobei mehrere Drucksensoren entlang der Kante oder Kanten verteilt sind, so dass mittels des Drucksensors oder der Drucksensoren beim Kollidieren des Möbelmoduls (2) mit einem bodennahen Objekt eine Detektion auslösbar ist.
